Europäisches Patentamt

European Patent Office

Office européen des brevets

(11) Veröffentlichungsnummer: **0 220 586 B1**

# EUROPÄISCHE PATENTSCHRIFT

(45) Veröffentlichungstag der Patentschrift: **18.12.91**

(51) Int. Cl.5: **G11B 5/706**, C01G 49/00, C09C 1/22

(21) Anmeldenummer: **86114128.1**

(22) Anmeldetag: **13.10.86**

(54) **Feinteilige isometrische Hexaferritpigmente mit W-Struktur, Verfahren zu ihrer Herstellung und deren Verwendung.**

(30) Priorität: **23.10.85 DE 3537623**

(43) Veröffentlichungstag der Anmeldung:
**06.05.87 Patentblatt 87/19**

(45) Bekanntmachung des Hinweises auf die
Patenterteilung:
**18.12.91 Patentblatt 91/51**

(84) Benannte Vertragsstaaten:
**DE FR GB IT NL**

(56) Entgegenhaltungen:
**DE-A- 3 405 603**
**US-A- 3 716 630**
**US-A- 4 493 874**

**PATENT ABSTRACTS OF JAPAN, Band 9, Nr. 218 (C-301)[1941], 5. September 1985; & JP - A - 60 81028 (TOUHOKU KINZOKU KOGYO K.K.) 09.05.1985**

**PATENT ABSTRACTS OF JAPAN, Band 9, Nr. 119 (C-282)[1842], 23. Mai 1985; & JP - A - 60 11232 (TOUHOKU KINZOKU KOGYO K.K.) 21.01.1985**

(73) Patentinhaber: **BAYER AG**

**W-5090 Leverkusen 1 Bayerwerk(DE)**

(72) Erfinder: **Buxbaum, Gunter, Dr.**
**Holzapfelweg 2**
**W-4150 Krefeld(DE)**
Erfinder: **Meisen, Ulrich, Dr.**
**Breslauer Strasse 31**
**W-4150 Krefeld(DE)**
Erfinder: **Haberey, Florian, Prof. Dr.**
**Marktstrasse 264**
**W-4630 Bochum(DE)**

PATENT ABSTRACTS OF JAPAN, Band 9, Nr. 28 (C-264)[1751], 6. Februar 1985; & JP - A - 59 174 530 (TOUHOKU KINZOKU KOGYO K.K.) 03.10.1984

PATENT ABSTRACTS OF JAPAN, Band 9, Nr. 28 (C-264)[1751], 6. Februar 1985; & JP - A - 59 174 531 (TOUHOKU KINZOKU KOGYO K.K.) 03.10.1984

PATENT ABSTRACTS OF JAPAN, Band 8, Nr. 226 (E-272)[1663], 17. Oktober 1984; & JP - A - 59 106 107 (TOUHOKU KINZOKU KOGYO K.K.) 19.06.1984

**Beschreibung**

Die vorliegende Erfindung betrifft feinteilige magnetische Hexaferritpigmente mit W-Struktur der allgemeinen Zusammensetzung

$$E_x M_m (I) M_n (II) Fe_{18-(m+n)} O_{27-y} D_y$$

wobei

E =
ein oder mehrere Elemente aus der Gruppe der Erdalkali-, Alkali- und Lanthanoide oder Blei,

M(I) und M(II) =
ein oder mehrere Elemente aus der Gruppe der Metalle oder Halbmetalle und

D =
ein oder mehrere Elemente aus der Gruppe der Halogene und Chalkogene sind und

$0,8 \leq x \leq 1,2$,

$1,0 \leq m \leq 3,0$,

$0 \leq n \leq 8,0$,

$0 \leq y \leq 5,0$ und

$n = y$, wenn $n > 0$

mit der Maßgabe, daß Elektroneutralität gewahrt ist, Verfahren zur Herstellung dieser Hexaferritpigmente sowie deren Verwendung in magnetischen Aufzeichnungsträgern.

Hexaferrite weisen Koerzitivfeldstärken auf, wie sie für die hochdichte magnetische Speicherung nötig sind (45 bis 120 KA m$^{-1}$). Sie sind dabei Metallpigmenten in ihrer chemischen Beständigkeit, CrO$_2$- und Co-dotierten Eisenoxidpigmenten in ihrer Thermostabilität überlegen. Für den Einsatz in hochdichten magnetischen Aufzeichnungsträgern wurden bereits Hexaferritpigmente mit Magnetoplumbit (M-)-Struktur vorgeschlagen. Diese besitzen in reiner Form als feinteilige Pigmente für Aufzeichnungszwecke bei weitem zu hohe Koerzitivfeldstärken (160 bis 480 KA m$^{-1}$). Zur Erzielung geeigneter Koerzitivfeldstärken wird üblicherweise mit Co-und Ti-Ionen dotiert. Hierdurch werden sowohl die Sättigungsmagnetisierung (M$_s$) als auch die thermische Beständigkeit herabgesetzt sowie die Wirtschaftlichkeit durch das teure Cobalt belastet. Es sind zahlreiche Hexaferrite unterschiedlicher Struktur bekannt (z.B. X, Y, Z, U), die aufgrund ihrer mangelnden Sättigungsmagnetisierung keine Anwendung in magnetischen Aufzeichnungsmedien gefunden haben (B.F. Haberey, Fachdokumentation des Fortschritts 1971, Sonderheft, Elektro-Anzeiger, Verlag W. Girardet, Essen). Von Interesse wäre aufgrund seiner hohen Sättigungsmagnetisierung der W-Hexaferrit. Bislang wurden jedoch nur die auf dem Wege der Sinterung mit anschließender Zerkleinerung hergestellten Pulver vorgeschlagen (JA-Appl. 84-106, 107; C.A. 1984, 101: 221237; JA 84-174, 530 C.A. 1984, 102-54951; JA 84-174, 531, C.A. 1984, 102-38462), die jedoch nicht die Kriterien eines magnetischen Pigmentes erfüllen. Voraussetzung für die Eignung als magnetische Aufzeichnungsmaterialien ist eine Feinteiligkeit der Pigmente mit Durchmessern zwischen 0,5 μm und 0,05 μm und eine enge Teilchengrößenverteilung.

Durch die nachträgliche Zerkleinerung von keramischen Fritten lassen sich nicht einheitlich feine Teilchen im notwendigen Pigmentgrößenbereich von kleiner 0,5 μm herstellen. Pigmentäre W-Hexaferrite sind bislang nicht bekannt. Zur Herstellung von hexagonalen M-Ferriten (Magnetoplumbit) geht man von Metallboratschmelzen aus (US-A 3 716 630 und US-A 4 493 874). Auf diese Weise gelang es, für magnetische Aufzeichnungszwecke geeignete Materialien herzustellen. Nachteil dieser Materialien ist jedoch die noch immer ungenügende Sättigungsmagnetisierung und das Verhalten der Koerzitivkraft bei steigender Temperatur. Ein weiterer Nachteil der M-Ferrite ist der Einsatz von Cobalt zur Einstellung des geeigneten Bereichs der Koerzitivkraft.

Die bekannten Verfahren zur Herstellung feinteiliger Hexaferrite zur Signalspeicherung streben anisometrische, speziell plättchenförmige Teilchen an, wobei günstige magnetische Eigenschaften bei ausgeprägter Plättchenform erwartet werden.

So ist in Patent Abstracts of Japan, Band 9, Nr. 218 (C-301) [1941], 5. September 1985, und JP-A-60 81028 (Touhoku Kinzoku Kogyo K.K.) ein Verfahren zur Herstellung von plättchenförmigem Hexaferrit mit W-Struktur beschrieben, wobei dessen Zusammensetzung entsprechende Mengen von BaCO$_3$, CuO, ZnO und Fe$_2$O$_3$ zusammen mit H$_3$BO$_3$ zur Schmelze gebracht, abgeschreckt und das entstehende amorphe Produkt erneut auf 1200° C erhitzt und weiter aufbereitet wird.

Bei den beschriebenen plättchenförmigen hexagonalen Ferriten steht die magnetisch leichte Richtung senkrecht zur Plättchenebene. Somit ist bei Senkrechtaufzeichnung die maximale Speicherdichte durch den Plättchendurchmesser begrenzt. Zusätzlich wird bei üblichen Herstellverfahren von magnetischen Speichermedien aufgrund des rheologischen Verhaltens von Dispersionen plättchenförmiger Pigmente nur eine mäßige Ausrichtung in der magnetischen Vorzugsrichtung erreicht.

Ein Ziel der vorliegenden Erfindung ist es, für die magnetische Aufzeichnung geeignete hexagonale Ferrite zur Verfügung zu stellen, die gegenüber den aus dem Stand der Technik bekannten in ihren Eigenschaften überlegen sind und in wirtschaftlicher Weise erhalten werden können.

Diese Anforderungen erfüllen in besonders hohem Maß feinteilige magnetische Hexaferritpigmente mit W-Struktur der allgemeinen Zusammensetzung

$$E_x M_m (I) M_n (II) Fe_{18-(m+n)} O_{27-y} D_y$$

wobei

E =

ein oder mehrere Elemente aus der Gruppe der Erdalkali-, Alkali- und Lanthanoide oder Blei,

M(I) und M(II) =

ein oder mehrere Elemente aus der Gruppe der Metalle oder Halbmetalle und

D =

ein oder mehrere Elemente aus der Gruppe der Halogene und Chalkogene sind und

$0,8 \leq x \leq 1,2$,

$1,0 \leq m \leq 3,0$,

$0 \leq n \leq 8,0$,

$0 \leq y \leq 5,0$ und

$n = y$, wenn $n > 0$

mit der Maßgabe, daß Elektroneutralität gewahrt ist, und wobei die Hexaferritpigmente in allen Raumrichtungen nahezu gleiche Abmessungen besitzen.

Diese erfindungsgemäßen Hexaferritpigmente zeichnen sich durch eine hohe Packbarkeit im Trägermaterial und durch die Möglichkeit aus, in jeder gewünschten Raumrichtung magnetisch ausrichtbar zu sein. Sie eignen sich somit hervorragend zum Einsatz in isotropen und senkrechtmagnetischen Aufzeichnungsverfahren. Bei den erfindungsgemäßen Pigmenten ist die Diskrepanz zwischen Form- und Kristallanisotropie aufgehoben, da die Formanisotropie verschwindet.

Derartige gut kristallisierte feinteilige Hexaferrite sind bislang noch nicht bekannt.

Das Verhältnis des Durchmessers zur Dicke der Teilchen der erfindungsgemäßen Hexaferritpigmente beträgt zwischen 0,6 und 1,5, besonders bevorzugt zwischen 0,8 und 1,3. Die Kristallgröße liegt im für Magnetpigmente üblichen Bereich.

Besonders bevorzugt sind solche Hexaferritpigmente, die eine Sättigungsmagnetisierung ($M_s$) von $\geq 80 nTm^3/g$ aufweisen. Die erfindungsgemäßen feinteiligen magnetischen Hexaferritpigmente weisen somit gegenüber den bisher bekannten feinteiligen Hexaferritpigmenten eine deutlich höhere Sättigungsmagnetisierung auf.

Die vorliegende Erfindung betrifft auch ein Verfahren zur Herstellung feinteiliger isometrischer magnetischer W-Hexaferritpigmente, wobei ein der Zusammensetzung der W-Hexaferritpigmente entsprechendes Gemisch aus Metalloxiden, -hydroxiden, -oxidhydroxiden, -carbonaten und/oder Nitraten zusammen mit Boroxid, Borsäure und/oder Metallboraten und/oder $SiO_2$ bei Temperaturen von 1100 bis 1450°C, besonders bevorzugt von 1250 bis 1350°C, geschmolzen, die erhaltene Schmelze auf $\leq 600°C$ abgeschreckt und anschließend bei Temperaturen zwischen 1000 und 1400°C 1 sec. bis 2 h getempert wird.

Besonders bevorzugt ist eine Ausführungsform des erfindungsgemäßen Verfahrens, bei der das Abschrecken in einem Kühlmittel, vorzugsweise einem flüssigen, wäßrigen Medium oder flüssigen Gasen, erfolgt.

Als weitere Bestandteile des Flux sind $NaFeO_2$, $V_2O_5$, $Bi_2O_3$, PbO und/oder $MoO_3$ geeignet.

Besonders bevorzugt ist die Ausführungsform des erfindungsgemäßen Verfahrens, bei der dem Gemisch 1 bis 10 Atom-% Metallfluoride und/oder Metallperoxide, bezogen auf die Zusammensetzung der W-Hexaferritpigmente, zugesetzt werden. Dabei werden als Metallfluoride und -peroxide vorteilhaft solche des Bariums eingesetzt.

Metallfluoride und Peroxide erhöhen die Sättigungsmagnetisierung der feinteiligen Hexaferrite und wirken sich günstig bei der Verarbeitung aus.

Die Metallkomponenten werden intensiv gemischt und in einem Kammerofen, Gasflammofen, Ringherdofen, Induktionsofen oder Lichtbogenofen geschmolzen. Es werden Schmelztemperaturen von 1100 bis 1450°C und Schmelzzeiten von 1 min bis 15 h, bevorzugt 10 min bis 6 h angewandt. Zur Erzielung einer homogenen Schmelze können auch niedrigere Temperaturen mit zwischengeschalteter Abkühlung, Homogenisierung und Wiederaufschmelzen Anwendung finden. Als Tiegelmaterial wird Platin, Zirkon, Nickel, Zirkondioxid (stabilisiert mit $Y_2O_3$ oder CaO), MgO, SiC, BN oder $SnO_2$ eingesetzt, wobei besonders bevorzugt Zirkondioxid, Nickel oder BN eingesetzt werden.

Die Schmelze wird von der Schmelztemperatur in möglichst kurzer Zeit auf Raumtemperatur abgeschreckt. Das abgekühlte Produkt wird daraufhin einer weiteren Wärmebehandlung in einem Kammerofen unterzogen, wobei Temperaturen von 1000 bis 1400°C und Zeiten von 1 sec bis 2 h angewandt werden. Das hierbei entstehende Produkt wird abgekühlt und einer Säurebehandlung unterzogen, wobei die glasartige Matrix mit einer schwachen Säure, bevorzugt Essigsäure, Weinsäure oder Citronensäure, behandelt wird.

Die herausragenden Eigenschaften dieses Verfahrens liegen in seiner Einfachheit und Flexibilität. Die nach dem erfindungsgemäßen Verfahren hergestellten magnetischen Hexaferrite weisen sehr gute Werte der Sättigungsmagnetisierung auf. Des weiteren zeichnet sich das Verfahren durch besondere Wirtschaftlichkeit aus.

Gegenstand der vorliegenden Erfindung ist auch die Verwendung der erfindungsgemäßen Hexaferrite in magnetischen Aufzeichnungsträgern.

## Beispiel 1

Eine Mischung aus 14,69 Gew.-% $B_2O_3$, 44,58 Gew.-% $BaCO_3$ 37,63 Gew.-% $Fe_2O_3$ und 3,10 Gew.-% ZnO wurde bei 1350°C in einem Platintiegel unter Luft zu einem homogenen Glasfluß geschmolzen. Die heiße Schmelze wurde auf einer Metallunterlage in 0,1 sec auf ca. 300 °C abgeschreckt. Nach einer Temperung bei 1150 °C, 1 h unter Luftzutritt und anschließender Säurebehandlung mit verdünnter Essigsäure (5 h) entstand ein feinteiliger Barium-hexaferrit der Formel $BaZn_2Fe_{16}O_{27}$ mit W-Struktur. Das Produkt wies folgende Eigenschaften auf:

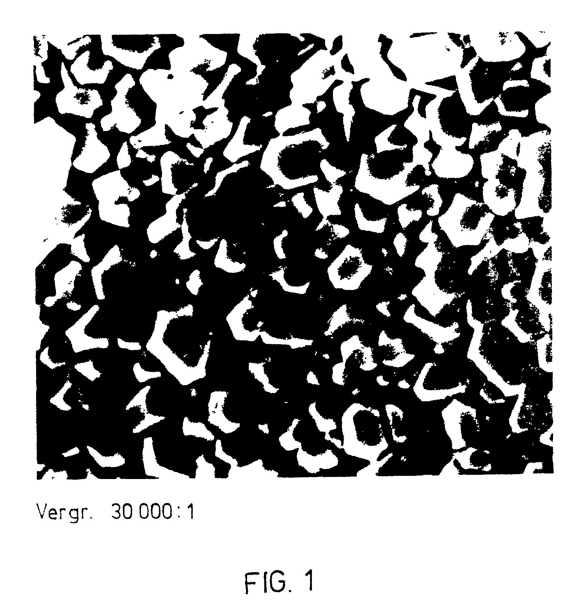

IHc: 48 $KAm^{-1}$
$M_s/\rho$: 97,1 $nTm^3/g$ bei 1200 $KAm^{-1}$ Meßfeld
Durchmesser ($\emptyset$) Dicke (D): 1,5
Die Phasenanalyse wurde durch Röntgenfeinstrukturanalyse vorgenommen. Aus REM-Aufnahmen wurde das Durchmesser/Dicke-Verhältnis bestimmt (Fig. 1).

### Beispiel 2

Eine Mischung, wie in Beispiel 1 angegeben, wurde wie unter 1 behandelt und 5 min bei 1150 °C getempert und anschließend wie unter 1 mit Essigsäure behandelt:
Es wurde ein W-Ferrit mit folgenden Eigenschaften erhalten:

IHc: 48 $KAm^{-1}$
$M_s/\delta$: 88 $nTm^3/l$ bei 1200 $KAm^{-1}$ Meßfeld
$\emptyset/D$ : 0,8

### Beispiel 3

Eine Mischung aus 11,91 Gew.-% $B_2O_3$, 47,26 Gew.-% $BaCO_3$, 36,59 Gew.-% $Fe_2O_3$, 3,01 Gew.-% ZnO und 1,23 Gew.-% $SiO_2$ wurde wie unter 1 behandelt. Es wurde ein W-Ferrit mit folgenden Eigenschaften erhalten:

IHc: 60 $KAm^{-1}$
$M_s/\rho$: 94 $nTm^3/g$ bei 1200 $KAm^{-1}$ Meßfeld.

### Beispiel 4

Eine Mischung aus 15,13 Gew.-% $B_2O_3$, 35,7 Gew.-% $BaCO_3$, 8,89 Gew.-% $BaF_2$, 37,58 Gew.-% $Fe_2O_3$ und 2,658 Gew.-% ZnO wurde bei 1350 °c in einem Platintiegel unter Luft zu einem homogenen Gasfluß geschmolzen. Die heiße Schmelze wurde in einer Walzenapparatur in 0,1 sec auf ca. 50 °C abgeschreckt. Nach einer Temperung bei 1150 °C, 10 Min unter Luftzutritt und anschließender Säurebehandlung mit verdünnter Essigsäure (5h) entstand ein feinteiliger Barium-hexaferrit mit W-Struktur. Dieser wies folgende Eigenschaften auf:

IHc: 32,6 $KAm^{-1}$
$M_s/\rho$: 90,5 $nTm^3/g$ bei 1200 $KAm^{-1}$ Meßfeld.

### Beispiel 5

Eine Mischung aus 15,15 Gew.-% $B_2O_3$, 35,80

Gew.-% $BaCO_3$, 8,72 Gew.-% $BaO_2$, 37,65 Gew.-% $Fe_2O_3$ und 2,66 Gew.-% ZnO wurde wie in Beispiel 4 behandelt. Es entstand ein feinteiliger Bariumhexaferrit mit W-Struktur, der folgende Eigenschaften aufwies:

IHc: 36,6 $KAm^{-1}$
$M_s/\rho$: 93,6 g $nTm^3/g$ bei 1200 $KAm^{-1}$ Meßfeld.

### Beispiel 6 (Vergleichsbeispiel)

Eine Mischung aus $B_2O_3$, $Fe_2O_3$ und ZnO einer derartigen Zusammensetzung, daß der Anteil an $BaF_2$ bzw. $BaO_2$ durch $BaCO_3$ ersetzt wurde, wurde wie in Beispiel 4 behandelt.
Der entstandene feinteilige Ba-hexaferrit mit W-Struktur hatte folgende Eigenschaften:

IHc: 36,6 KA/m
$M_s/\rho$: 85,3 $nTm^3/g$ bei 1200 KA/m Meßfeld

## Patentansprüche

1. Feinteilige magnetische Hexaferritpigmente mit W-Struktur der allgemeinen Zusammensetzung

$$E_x M_m (I) M_n (II) Fe_{18-(m+n)} O_{27-y} D_y$$

wobei

E =
ein oder mehrere Elemente aus der Gruppe der Erdalkali-, Alkali- und Lanthanoide oder Blei,
M(I) und M(II) =
ein oder mehrere Elemente aus der Gruppe der Metalle oder Halbmetalle und
D =
ein oder mehrere Elemente aus der Gruppe der Halogene und Chalkogene sind und
$0,8 \leq x \leq 1,2$,
$1,0 \leq m \leq 3,0$,
$0 \leq n \leq 8,0$,
$0 \leq y \leq 5,0$ und
n =
y wenn n > 0
mit der Maßgabe, daß Elektroneutralität gewahrt ist,

dadurch gekennzeichnet, daß die Hexaferritpigmente in allen Raumrichtungen nahezu gleiche Abmessungen besitzen, wobei das Verhältnis des Durchmessers zur Dicke der Teilchen zwischen 0,6 und 1,5, besonders bevorzugt zwischen 0,8 und 1,3, beträgt.

2. Feinteilige magnetische Hexaferritpigmente gemäß Anspruch 1, dadurch gekennzeichnet, daß sie eine Sättigungsmagnetisierung ($M_s$) von $\geq$ 80 nT $m^3/g$ aufweisen.

3. Verfahren zur Herstellung feinteiliger isometrischer magnetischer W-Hexaferritpigmente gemäß einem der Ansprüche 1 oder 2, dadurch gekennzeichnet, daß ein der Zusammensetzung der W-Hexaferritpigmente entsprechendes Gemisch aus Metalloxiden, -hydroxiden, -oxidhydroxiden, -carbonaten und/oder Nitraten zusammen mit Boroxid, Borsäure und/oder Metallboraten und/oder $SiO_2$ bei Temperaturen von 1100 bis 1450° C, besonders bevorzugt von 1250 bis 1350° C, geschmolzen, die erhaltene Schmelze auf $\leq$ 600° C abgeschreckt und anschließend bei Temperaturen zwischen 1000 und 1400° C 1 sec bis 2 h getempert wird.

4. Verfahren gemäß Anspruch 3, dadurch gekennzeichnet, daß dem Gemisch 1 bis 10 Atom-% Metallfluoride und/oder Metallperoxide, bezogen auf die Zusammensetzung der W-Hexaferritpigmente, zugesetzt werden.

5. Verfahren gemäß Anspruch 4, dadurch gekennzeichnet, daß die Metallfluoride und -peroxide solche des Bariums sind.

6. Verfahren gemäß einem oder mehreren der Ansprüche 3 bis 5, dadurch gekennzeichnet, daß das Abschrecken in einem Kühlmittel, vorzugsweise einem flüssigen, wäßrigen Medium oder flüssigen Gasen, erfolgt.

7. Verfahren gemäß einem oder mehreren der Ansprüche 3 bis 5 dadurch gekennzeichnet, daß das Reaktionsprodukt mit einer schwachen Säure behandelt wird.

8. Verfahren gemäß Anspruch 6, dadurch gekennzeichnet, daß die schwache Säure Citronensäure, Oxalsäure und/oder Weinsäure ist.

9. Verwendung der feinteiligen magnetischen W-Hexaferritpigmente gemäß einem oder mehreren der Ansprüche 1 bis 7 in magnetischen Aufzeichnungsträgern.

## Claims

1. Fine-particle magnetic hexaferrite pigments of W structure having the general composition

$$E_x M_m (I) M_n (II) Fe_{18-(m+n)} O_{27-y} D_y$$

in which
E =
one or more elements from the group of the alkaline earth metals, alkali metals and lanthanoids or lead,
M(I) and M(II) =
one or more elements from the group of metals or semimetals and
D =
one or more elements from the group of halogens and chalcogens and
$0.8 \leq x \leq 1.2$,
$1.0 \leq m \leq 3.0$,
$0 \leq n \leq 8.0$,
$0 \leq y \leq 5.0$ and
$n = y$ where $n > 0$
with the proviso that electroneutrality is observed, characterized in that the hexaferrite pigments have substantially the same dimensions in all spatial directions, the diameter-to-thickness ratio of the particles being between 0.6 and 1.5 and, more preferably, between 0.8 and 1.3.

2. Fine-particle magnetic hexaferrite pigments as claimed in claim 1, characterized in that they have a saturation magnetization ($M_s$) of $\geq$ 80 nT m$^3$/g.

3. A process for the production of the fine-particle isometric magnetic W-hexaferrite pigments claimed in claim 1 or 2, characterized in that a mixture of metal oxides, hydroxides, oxide hydroxides, carbonates and/or nitrates - corresponding to the composition of the of the W-hexaferrite pigments - is melted together with boron oxide, boric acid and/or metal borates and/or $SiO_2$ at temperatures of 1,100 to 1,450° C and preferably at temperatures of 1,250 to 1,350° C, the melt obtained is quenched to $\leq$ 600° C and then heated for 1 second to 2 hours at temperatures of 1,000 to 1,400° C.

4. A process as claimed in claim 3, characterized in that 1 to 10 atom-% metal fluorides and/or metal peroxides, based on the composition of the W-hexaferrite pigments, are added to the mixture.

5. A process as claimed in claim 4, characterized in that the metal fluorides and peroxides are those of barium.

6. A process as claimed in one or more of claims 3 to 5, characterized in that the melt is quenched in a coolant, preferably a liquid aqueous medium or liquid gases.

7. A process as claimed in one or more of claims 3 to 5, characterized in that the reaction product is treated with a weak acid.

8. A process as claimed in claim 6, characterized in that the weak acid is citric acid, oxalic acid and/or tartaric acid.

9. The use of the fine-particle magnetic W-hexaferrite pigments according to one or more of claims 1 to 7 in magnetic recording supports.

## Revendications

1. Pigments hexaferritiques magnétiques en fines particules à structure en W de composition générale :

$$E_x M_m (I) M_n (II) Fe_{18 - (m + n)} O_{27 - y} D_y$$

dans laquelle :
E = un ou plusieurs éléments du groupe des métaux alcalino-terreux, des métaux alcalins, des lanthanoïdes ou du plomb,
M(I) et M(II) = un ou plusieurs éléments du groupe des métaux ou des métalloïdes, et
D = un ou plusieurs éléments du groupe des halogènes et des chalcogènes, et

$0,8 \leq x \leq 1,2$,
$1,0 \leq m \leq 3,0$,
$0 \leq n \leq 8,0$,
$0 \leq y \leq 5,0$ et
$n = y$, lorsque $n > 0$

sous réserve que la neutralité électrique est assurée,
caractérisés en ce qu'ils ont des dimensions à peu près égales dans toutes les directions de l'espace, le rapport diamètre/épaisseur des particules se situant entre 0,6 et 1,5, de préférence entre 0,8 et 1,3.

2. Pigments hexaferritiques magnétiques en fines particules selon la revendication 1, caractérisés en ce qu'ils ont une magnétisation de saturation ($M_s$) supérieure ou égale à 80 nTm$^3$/g.

3. Procédé de préparation de pigments hexaferritiques magnétiques isométriques en fines particules en W selon une des revendications 1 ou 2, caractérisé en ce que l'on fond à des températures de 1 100 à 1 450°C, de préférence de 1 250 à 1 350°C, un mélange d'oxydes, d'hydroxydes, d'oxydes basiques, de carbonates et/ou de nitrates métalliques à la composition des pigments d'hexaferrites en W, avec de l'oxyde de bore, de l'acide borique et/ou des borates métalliques et/ou SiO$_2$, on refroidit la masse fondue à des températures inférieures ou égales à 600°C puis on recuit à des températures de 1 000 à 1 400°C pendant une durée de 1 s à 2 h.

4. Procédé selon la revendication 3, caractérisé en ce que l'on ajoute au mélange de 1 à 10 atomes % de fluorures métalliques et/ou de peroxydes métalliques par rapport à la composition des pigments hexaferritiques en W.

5. Procédé selon la revendication 4, caractérisé en ce que les fluorures et peroxydes métalliques sont ceux du baryum.

6. Procédé selon une ou plusieurs des revendications 3 à 5, caractérisé en ce que le refroidissement est réalisé dans un milieu réfrigérant, de préférence un milieu aqueux liquide ou un gaz liquéfié.

7. Procédé selon une ou plusieurs des revendications 3 à 5, caractérisé en ce que le produit de réaction est traité par un acide faible.

8. Procédé selon la revendication 6, caractérisé en ce que l'acide faible est l'acide citrique, l'acide oxalique et/ou l'acide tartrique.

9. Utilisation des pigments magnétiques d'hexaferrites en W en fines particules selon une ou plusieurs des revendications 1 à 7, dans des supports d'enregistrement magnétiques.

Vergr. 30 000 : 1

FIG. 1